# EUROPEAN PATENT APPLICATION

(11) **EP 2 333 294 A1**
(43) Date of publication of application: **15.06.2011**
(21) Application number: 10190917.4
(22) Date of filing: 11.11.2010
(51) Int. Cl.: F02M 35/10, F02B 27/02, F02D 9/16

(54) **Air intake apparatus for internal combustion engine**

(30) Priority: 19.11.2009 JP 2009264330
(71) Applicant: AISIN SEIKI KABUSHIKI KAISHA, Kariya-shi, Aichi 448-8650 (JP)
(72) Inventor: Kumagai, Hiroaki, Kariya-shi Aichi 448-8650 (JP); Sakagami, Eiji, Kariya-shi Aichi-ken 448-8650 (JP)
(74) Representative: Kramer - Barske - Schmidtchen

(57) **Abstract**

An air intake apparatus for internal combustion engine includes a casing (C) having a hollow shape and constituting an air intake passage connected to a cylinder of an internal combustion engine, the casing including an intake port (P1) and a discharge port (P2), and a rotary valve (V) mounted at an inside of the casing in a rotatably driven manner and including a rotor (R) that adjusts a volume of an airflow from the intake port (P1) to the discharge port (P2) of the casing. The rotor includes a valve element edge portion (12c) that varies an opening area of the discharge port, the valve element edge portion being formed by a cut portion (12A).

## Description

### TECHNICAL FIELD

This disclosure relates to an air intake apparatus for an internal combustion engine.

### BACKGROUND DISCUSSION

A known air intake apparatus for an internal combustion engine includes a casing having a hollow shape and constituting an air intake passage connected to a cylinder of an internal combustion engine. The air intake apparatus also includes a rotary valve mounted at an inside of the casing so as to be rotatably driven and including a rotor provided for adjusting a volume of an airflow from an intake port to a discharge port of the casing. The aforementioned known air intake apparatus may be configured in such a manner that the rotor is rotated in a direction where a portion of the air intake passage is closed to thereby position an edge portion of a valve element of the rotor at a maximally closed position. As a result, the air intake passage is reduced to achieve a narrow passage. Such air intake apparatus for an internal combustion engine is disclosed in JP2008-8150A. Because the air intake passage is reduced, a flow speed of air taken in, when passing through a clearance surrounded by an inner peripheral wall of the discharge port and the linearly shaped edge portion of the valve element, increases to thereby enhance the air to mix with fuel that is injected from a fuel injection nozzle provided at a downstream side of the air intake apparatus. As a result, combustion efficiency is improved.

According to the air intake apparatus disclosed in JP2008-8150A, even though the narrow passage is obtained by the rotor of the rotary valve, a cross section of the passage at that time is formed into a substantially horizontally long shape (i.e., a flat shape) because of the linear shape of the edge portion of the valve element. After the air flows through the narrow passage having the substantially horizontally long cross section (i.e., a flat cross section), the airflow may be dispersed and the speed of the airflow tends to decrease. In order to improve a combustion efficiency of the internal combustion engine, it is known that a generation of a strong tumble flow at the cylinder of the internal combustion engine is effective. However, according to the aforementioned air intake apparatus disclosed in JP2008-8150A, the airflow may be dispersed and the strong air flow may fail to generate.

A need thus exists for an air intake apparatus for an internal combustion engine that can generate a strong tumble flow at a cylinder with a usage of a rotary valve.

### SUMMARY

According to an aspect of this disclosure, an air intake apparatus for an internal combustion engine includes a casing having a hollow shape and constituting an air intake passage connected to a cylinder of an internal combustion engine, the casing including an intake port and a discharge port, and a rotary valve mounted at an inside of the casing in a rotatably driven manner and including a rotor that adjusts a volume of an airflow from the intake port to the discharge port of the casing. The rotor includes a valve element edge portion that varies an opening area of the discharge port, the valve element edge portion being formed by a cut portion.

According to the aforementioned disclosure, the air passing through the rotary valve tends to be collected around the cut portion where a certain airflow is obtained, thereby generating a further strong tumble flow at a downstream side of the air intake apparatus. In addition, because the air is collected around the cut portion, a circumferential length of a main cross section of an air intake passage may be configured to be shorter than that of a known passage having a substantially horizontally long (i.e., flat) cross section. As a result, a surface friction loss of the air relative to a peripheral wall of the air intake passage may be reduced so that a higher flow speed of the air is obtained when the air passes through the rotary valve. When comparing two passages having the same cross-sectional areas and different rectangular shapes (i.e., one of the passages has a substantially horizontally long rectangular cross section while the other of the passages has a square cross section), for example, the circumferential length of the passage increases in association with an increase of a substantially horizontal length of the cross section and is minimized when the passage has the square shape. Thus, according to the disclosure, the strong airflow and the decrease of the surface friction loss at the main cross section of the passage achieve an increase of the flow speed of the air sent to the internal combustion engine and a generation of the strong tumble flow. As a result, the combustion efficiency of the internal combustion engine increases.

The cut portion is formed in such a manner that a center of the cut portion along a rotational axis of the rotor is dented greater than both end portions of the cut portion along the rotational axis.

At this time, the air passing through the rotary valve is collected around a center of the passage, thereby generating a strong airflow at the downstream side because of a high speed airflow. As a result, the combustion efficiency of the internal combustion engine is improved.

A guide surface is formed at an edge of the cut portion to change a direction of the airflow and is specified to be in a tapered state where a distance between the guide surface and a facing surface of an inner wall surface of the discharge port facing the guide surface decreases in a direction towards the discharge port in a case where the rotor is arranged in a maximally closed position relative to the discharge port.

In a case where the rotor is arranged in the maximally closed position relative to the discharge port, i.e., where the air intake passage is maximally reduced (for example, the number of rotations of the internal combustion engine is small), the air collected at the cut portion is guided to the downstream side along the guide surface. The guide surface is specified to be in the tapered state at that time so that the airflow is oriented and directed obliquely towards the facing surface. As a result, the air passing through the cut portion flows vigorously to the downstream side along the facing surface to thereby generate the strong tumble flow at the cylinder connected to the internal combustion engine. An outer peripheral surface of the valve element of the rotary valve is configured to have a predetermined distance relative to a bore formed at the casing while an inner peripheral surface of the valve element serves as a contact guide surface for the air passing through the rotary valve. Thus, the valve element generally includes an appropriate thickness. The cut portion is obtained by cutting the valve element in the thickness direction thereof and the edge of the cut portion serves as the guide surface. Then, because the guide surface is continuously formed with the contact guide surface (the inner peripheral surface), the air is smoothly guided to the downstream side. When considering a case where the valve element is formed into a thin plate where the cut portion is obtained by cutting but the guide surface is not formed, an eddy current that disturbs the flowing of air may be generated around the cut portion when the air passes through the cut portion. Therefore, the flow speed of the air is low compared to the valve element having the guide surface.

The guide surface is specified to be in the tapered state in a case where the rotor is arranged in a partially open position that is positioned in an opening side relative to the maximally closed position.

Accordingly, not only in a case where the rotor is in the maximally closed position but also in a case where the rotor is in the partially open position, the guide surface is maintained in the tapered state. Thus, the combustion efficiency of the internal combustion engine may increase in a state of a relatively small volume of the intake air, not only when the number of rotations of the internal combustion engine is small but also when the number of rotations is slightly large.

A guide surface is formed at an edge of the cut portion to change a direction of the airflow and is specified to be in a tapered state where a distance between the guide surface and a facing surface of an inner wall surface of the discharge port facing the guide surface decreases in a direction towards the discharge port in a case where the internal combustion engine is in an idling state.

Accordingly, the air collected at the cut portion is guided to the downstream side along the guide surface in the idling state of the internal combustion engine (i.e., when the number of rotations of the internal combustion engine is small). The guide surface is specified to be in the tapered state so that the airflow is oriented and directed obliquely towards the facing surface. As a result, the air passing through the cut portion flows vigorously to the downstream side along the facing surface to thereby generate the strong tumble flow at the cylinder connected to the internal combustion engine.

The intake port includes a short intake port and a long intake port having a longer path length than the short intake port, and the short intake port is closed by a rotation of the rotor while the cut portion is provided at the rotor.

Even when the cut portion is provided at the valve element, the short intake port is securely closed by the rotation of the rotor. The long intake port and the short intake port may be separately used from each other to supply the air so that the appropriate combustion is obtained at the internal combustion engine.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a schematic view illustrating an air intake apparatus for an internal combustion engine according to an embodiment disclosed here;

Fig. 2 is a perspective view schematically illustrating the air intake apparatus for the internal combustion engine;

Fig. 3 is a cross sectional view of a rotary valve provided at the air intake apparatus for the internal combustion engine when viewed in a radial direction of a rotor of the rotary valve;

Fig. 4 is a partially cutaway perspective view of the rotor;

Fig. 5 is a cross sectional view illustrating an operation of the rotary valve when viewed along a rotational axis of the rotary valve;

Fig. 6 is a cross sectional view illustrating another operation of the rotary valve when viewed along the rotational axis;

Fig. 7 is a cross sectional view illustrating still another operation of the rotary valve when viewed along the rotational axis;

Fig. 8 is a cross sectional view illustrating still another operation of the rotary valve when viewed along the rotational axis; and

Fig. 9 is a cross sectional view of a main portion of a valve element including a guide surface; and

Fig. 10 is a lateral front view illustrating a rotor according to another embodiment disclosed here.

### DETAILED DESCRIPTION

An embodiment disclosed here will be explained with reference to the attached drawings. An air intake apparatus for an internal combustion engine according to the embodiment is applied to a vehicle equipped with a four-cylinder engine, for example. In the embodiment, directions and orientations such as left, right, front, rear, top, and bottom correspond to those when viewed from an occupant of a vehicle equipped with the air intake apparatus for the internal combustion engine.

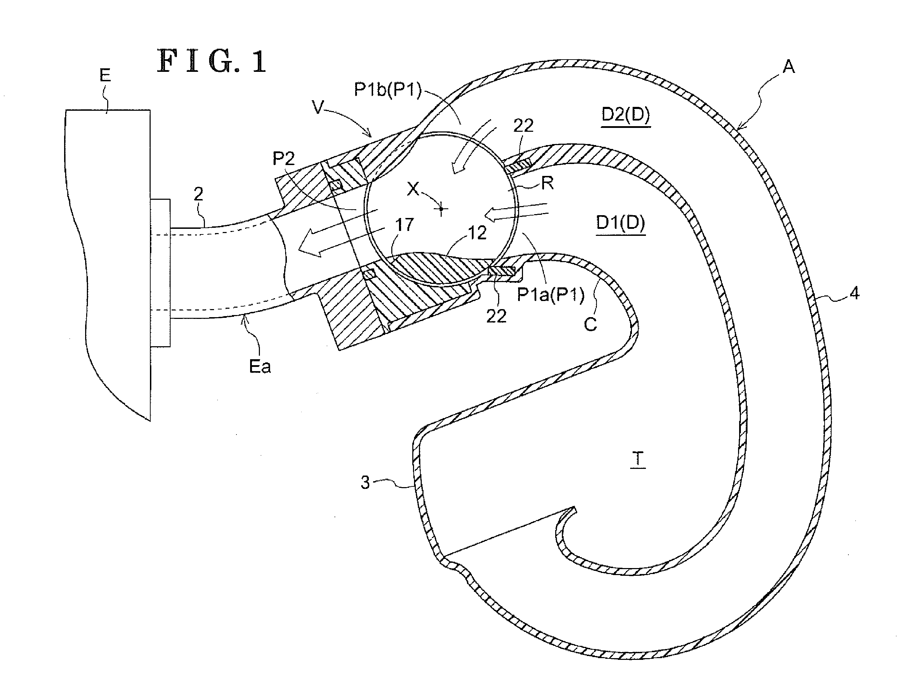

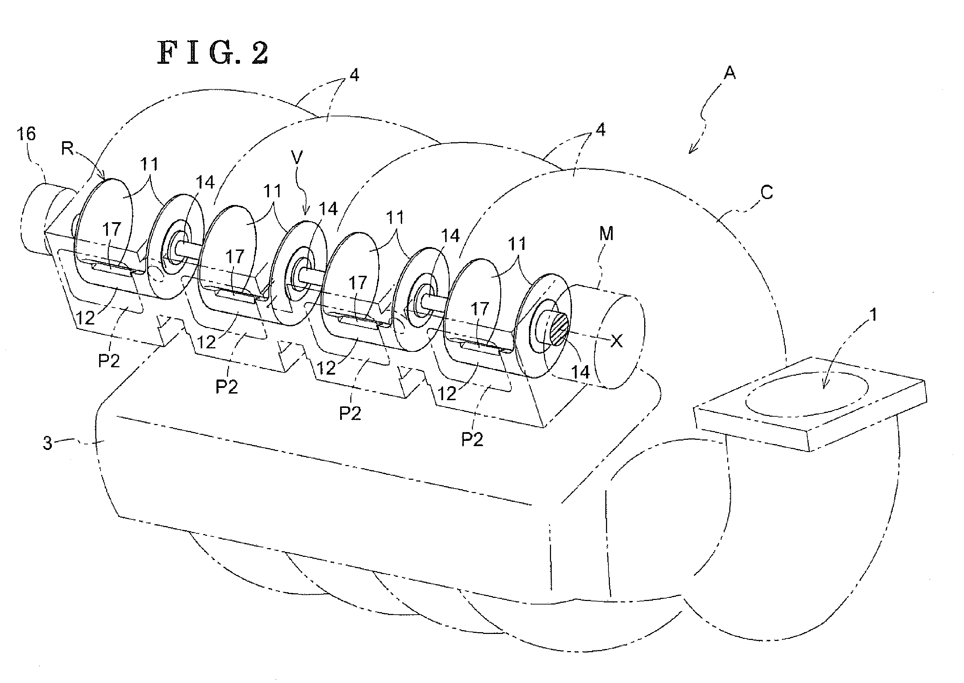

As illustrated in Figs. 1 and 2, an air intake apparatus for an internal combustion engine (which will be hereinafter simply referred to as an air intake apparatus) includes a body A having a surge tank T and a casing C. The surge tank T includes an air storage void. The casing C having a hollow shape constitutes an air intake passage D connected to a cylinder of an engine E serving as an internal combustion engine. The air intake passage D includes a first intake passage D1 connected to the surge tank T and a second intake passage D2 connected to the surge tank T and having a longer path length than that of the first intake passage D1. The first and second intake passages D1 and D2 are connected to an intake port P1 of the body A. A rotary valve V is provided at an upper portion of the body A so as to control air taken in from the first and second intake passages D1 and D2 (i.e., an air intake) and to supply the controlled air to an air intake portion Ea of the engine E. The air intake portion Ea is connected to a cylinder head of the engine E via an intake pipe 2. A fuel injection nozzle is provided at a downstream portion of the intake pipe 2.

A tank wall 3 having a hollow shape and constituting the surge tank T is formed by a welding connection of resin molded products. An inlet 1 is formed at an exterior portion of the tank wall 3 as illustrated in Fig. 2. Outside air is sucked into the inlet 1 via an air cleaner and a throttle. A cylindrical void formed at an upper portion of the tank wall 3 defines the first intake passage D1 while a pipe portion 4 integrally formed at an exterior surface of the tank wall 3 defines the second intake passage D2 as illustrated in Fig. 1. The rotary valve V includes a rotor R that is inserted into a bore formed at the cylindrical-shaped casing C and that is rotatable about a rotational axis X of the rotary valve V. A short intake port P1a (the intake port P1) connected to the first intake passage D1, a long intake port P1 b (the intake port P1) connected to the second intake passage D2, and a discharge port P2 connected to the air intake portion Ea are formed in an opening manner at the casing C.

An air intake control system is achieved by a rotational position of the rotor R to thereby control the air sent to the air intake portion Ea. The rotational position of the rotor R is determined by an air intake control unit constituted by an electronic control unit (i.e., an ECU), and the like to thereby control the air sent to the air intake portion Ea.

As mentioned above, the rotary valve V is arranged at the upper portion of the surge tank T. A shape of a path where the air flows (i.e., a path shape), of the first intake passage D1 is determined so that the flow of the air is obtained in an obliquely upward direction relative to the rotary valve V. The second intake passage D2 includes an entirely arc-shaped path so as to surround an exterior side of the surge tank T. A path shape of an edge portion (i.e., a portion facing the rotary valve V) of the second intake passage D2 is determined so that the flow of the air is obtained in an obliquely downward direction relative to the rotary valve V. A path shape from the rotary valve V to the air intake portion Ea is determined so that the flow of the air is substantially horizontal.

The path length, inner diameter, and angle to transmit the air to the air intake portion Ea, of the second intake passage D2 are defined to be respective values so that an inertia supercharging effect of the air is maximally exercised when the engine E is rotating at a medium speed.

As illustrated in Figs. 2 to 4, the rotary valve V includes multiple partition walls 11 each having a disc shape relative to the rotational axis X, valve elements 12 each having a wing shape and formed between a pair of partition walls 11 adjacent to each other, and a shaft member 14 having a column shape. The partition walls 11, the valve elements 12, and the shaft member 14 are integrally formed by resin molding as illustrated in Fig. 2 to constitute the rotary valve V. The shaft member 14 may be made of metal to be integrated with the partition walls 11 and the valve elements 12. The outer diameter of each of the partition walls 11 is specified to be slightly smaller than the inner diameter of the bore of the casing C.

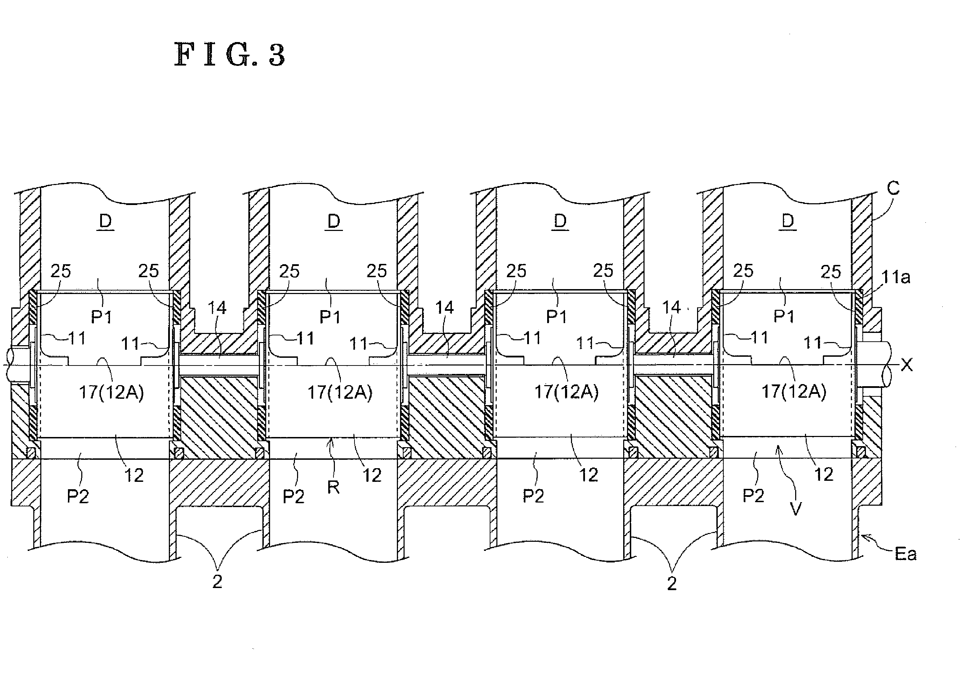

The partition walls 11 have a function to restrain the flow of the air towards the rotational axis X. A distance between respective facing surfaces of the pair of adjacent partition walls 11 is specified to be slightly larger than a width of each of the ports P1a, P1b, and P2 in a direction along the rotational axis X. As illustrated in Fig. 3, a side seal member 25 made of flexible resin is disposed between an outer surface 11a of each of the partition walls 11 and the casing C.

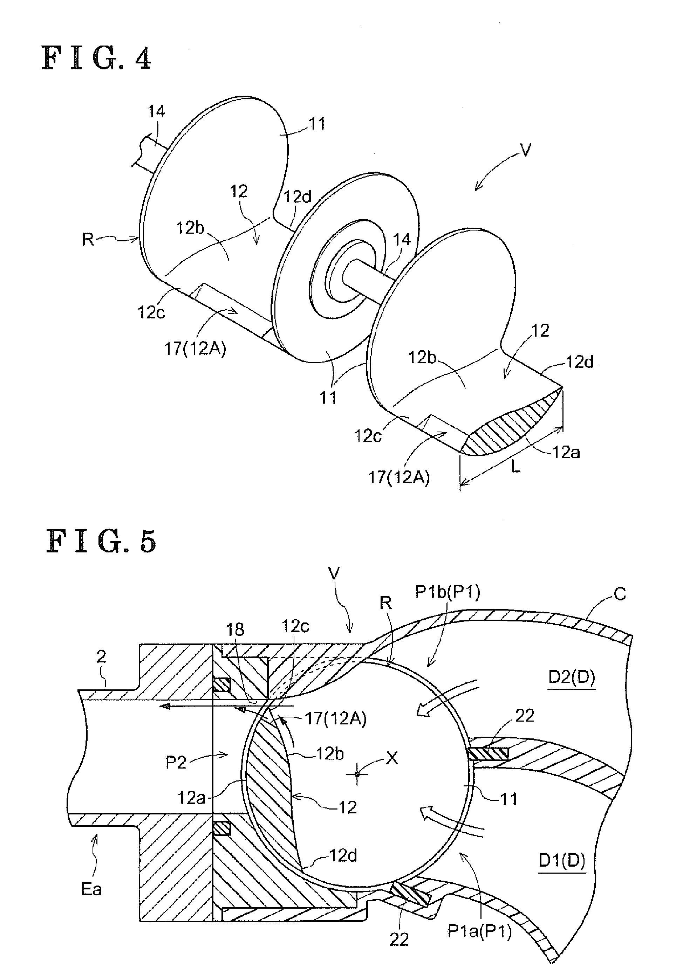

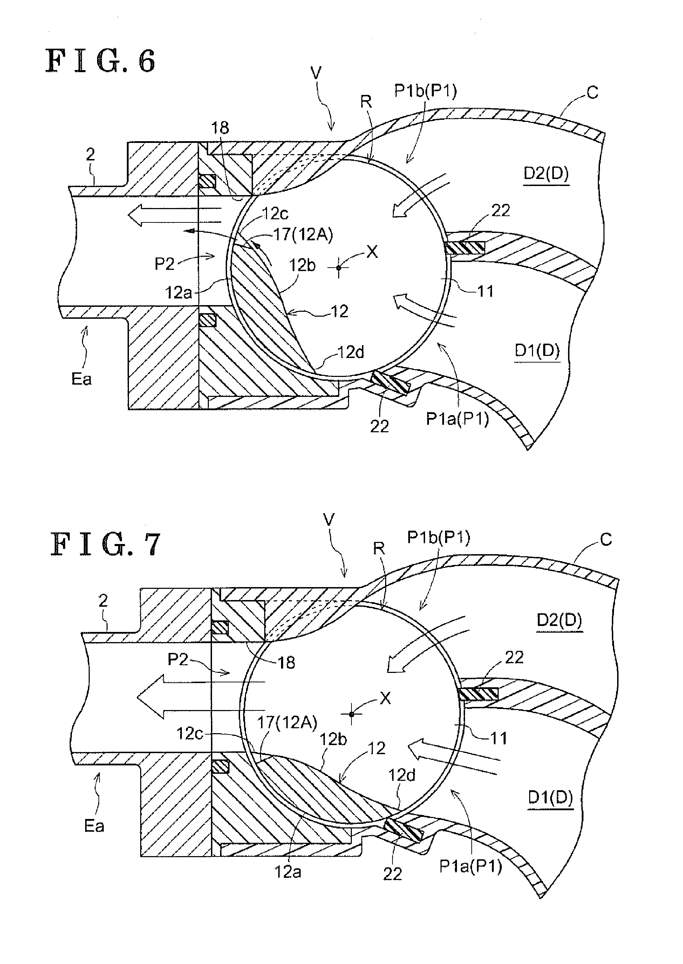

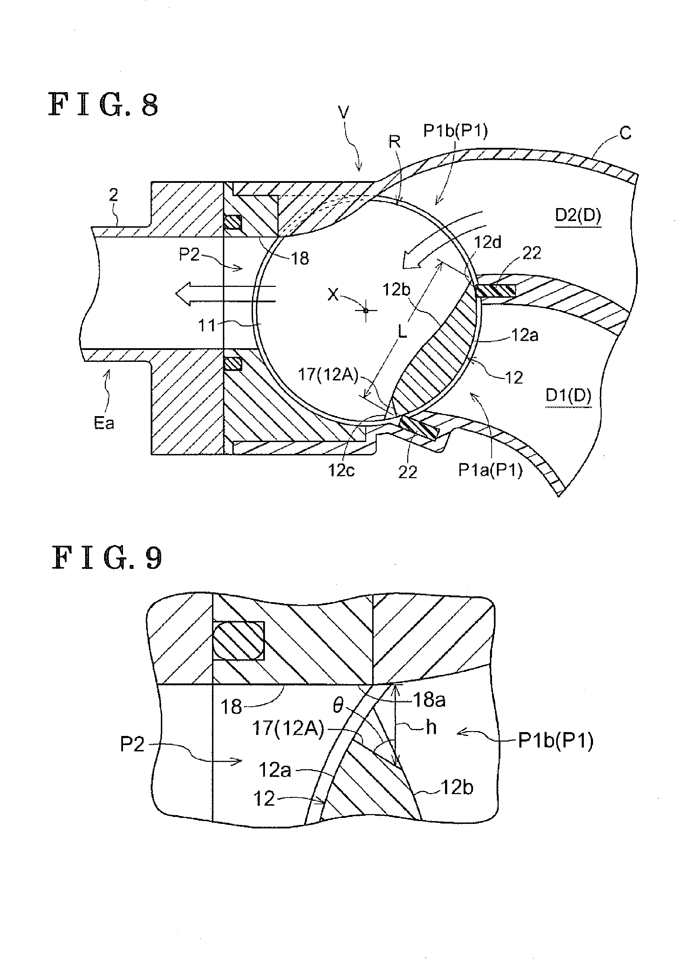

The valve elements 12 have a function to control the air intake by means of the rotational position of the rotor R about the rotational axis X. As illustrated in Figs. 5 to 8, an outer peripheral surface 12a of each of the valve elements 12 has a curved surface that extends along an inner peripheral surface of the bore of the casing C. On the other hand, as illustrated in Fig. 7, an inner peripheral surface 12b of each of the valve elements 12 has a joining curved surface smoothly connected to extension surfaces of an inner peripheral surface of the short intake port P1a and an inner peripheral surface of the discharge port P2 so that the inner peripheral surfaces of the short intake port P1a and the discharge port P2 are smoothly connected to each other. In Fig. 5, the inner peripheral surface 12b is formed into a mirrored S-shape. An edge portion of each of the valve elements 12 that is positioned at a front end in a closing direction of the valve element 12, i.e., a front edge portion 12c serving as a valve element edge portion, is formed by a cut portion 12A as illustrated in Figs. 4 and 5. The front edge portion 12c varies an opening area of the discharge port P2. An edge portion of each of the valve elements 12 that is positioned at a rear end in the closing direction of the valve element 12, i.e., a rear edge portion 12d, is formed into a linear shape along the rotational axis X. A length of the valve element 12 in a circumferential direction thereof (i.e., a distance L between the cut portion 12A and the rear edge portion 12d as illustrated in Fig. 4) is determined in such a manner to securely close the opening of the short intake port P1 a. The cut portion 12A is formed at substantially a center of the front edge portion 12c of the valve element 12 in a longitudinal direction thereof (i.e., a direction along the rotational axis X) so as to guide the airflow from the intake port P1 to a center of the air intake passage D, thereby increasing a flow speed of the airflow towards the air intake portion Ea. A guide surface 17 is formed at an edge of the cut portion 12A so as to change a direction of the airflow. The guide surface 17 is formed to incline in such a manner that, when the rotor R is arranged in a maximally closed position relative to the discharge port P2 as illustrated in Fig. 5, a vertical distance h (distance) defined between the guide surface 17 and an extension surface of a facing inner wall surface 18a (facing surface) of an inner wall surface 18 of the discharge port P2 facing the guide surface 17 (see Fig. 9) decreases in a direction towards the discharge port P2. That is, the guide surface 17 is specified to be in a tapered state where the vertical distance h between the guide surface 17 and the facing inner wall surface 18a of the inner wall surface 18 of the discharge port P2 facing the guide surface 17 decreases in a direction towards the discharge port (P2) in a case where the rotor R is arranged in the maximally closed position relative to the discharge port P2. Specifically, as illustrated in Fig. 9, an angle formed by the guide surface 17 and a direction related to the vertical distance h is specified within a range greater than 0 (zero) degrees and equal to or smaller than 90 degrees. Accordingly, because of the guide surface 17, the airflow is gathered and obliquely directed towards the facing inner wall surface 18a. As a result, the air passing through a clearance between the guide surface 17 and the facing inner wall surface 18a vigorously flows along the facing inner wall surface 18a towards the downstream side to thereby generate a strong tumble flow within the cylinder connected to the internal combustion engine. That is the combustion efficiency may be improved in an idling state of the engine E where the volume of air intake is small. Not only in a case where the rotor R is arranged in the maximally closed position relative to the discharge port P2 but also in a case where the rotor R is arranged in a partially open position where the rotor R is in an opening side relative to the maximally closed position as illustrated in Fig. 6, the aforementioned guiding of the airflow is effectively conducted in an extremely low speed rotating state in addition to the idling state of the engine E because of the aforementioned shape of the guide surface 17. Therefore, the effective combustion is achieved. An axial sealing member 22 is disposed between the outer peripheral surface 12a of the valve element 12 and the casing C in the vicinity of each side of the opening of the short intake port P1 a. The axial sealing member 22 is formed into a linear shape and is arranged along the rotational axis X.

The shaft member 14 is coaxially arranged relative to the rotational axis X to thereby rotatably support the rotor R relative to the casing C. In addition, as illustrated in Fig. 2, the shaft member 14 connects the partition walls 11 adjacent to each other. Both outer ends of the shaft member 14 protrude outside from the respective partition walls 11. One of the outer ends of the shaft member 14 is connected to an output shaft of an electric motor M serving as an actuator while the other of the outer ends is connected to an angle sensor 16 such as a rotary encoder. The rotor R is arranged in a target rotational position when the air intake control unit controls the electric motor M to rotate either in a forward direction or a reverse direction in a state where a detection signal from the angle sensor 16 is fed back to the intake control unit.

In the air intake apparatus of the present embodiment, the rotational position of the rotor R is determined as illustrated in Fig. 5 in the case of the idling rotation of the engine E. That is, the valve element 12 is arranged in a position where the air intake is achieved via the cut portion 12A while an area of the opening of the discharge port P2 is substantially fully closed by the valve element 12. Accordingly, the small volume of air intake through the cut portion 12A achieves the relatively high-speed air intake at respective upper ranges of the discharge port P2 and the air intake portion Ea, which is caused by the cut portion 12A that collects the airflow substantially towards the center of the air intake passage D and the guide surface 17 that guides the airflow. The air and fuel are promptly or sufficiently mixed to thereby obtain the effective combustion.

In the case of the extremely low speed rotation of the engine E, the rotational position of the rotor R is determined as illustrated in Fig. 6. That is, the valve element 12 is arranged at a position where an upper end of the valve element 12 is slightly displaced downward relative to the discharge port P2 while the area of the opening of the discharge port P2 is mostly closed by the valve element 12. The air is supplied to a combustion chamber of the engine E via a void formed at an upper portion of the valve element 12. At a time of such air intake, the tumble flow is generated within the cylinder of the engine E so as to promote the mixture of the air and the fuel supplied from the fuel injection nozzle. As a result, the appropriate combustion is obtained.

In the case of the low speed rotation of the engine E, the rotational position of the rotor R is determined as illustrated in Fig. 7. That is, the valve element 12 is arranged at a position where the valve element 12 is prevented from interfering with any ports P1a, P1b, and P2. Accordingly, the air taken in from both of the short intake port P1 a and the long intake port P1b is supplied to the air intake portion Ea.

In the case of the medium speed rotation of the engine E, the rotational position of the rotor R is determined as illustrated in Fig. 8. That is, the rotor R is arranged in a position to close the opening of the short intake port P1 a. At this time, the short intake port P1 a is closed by a rotation of the rotor R while the cut portion 12A is provided at the rotor R. Accordingly, the air taken in from the long intake port P1 b is linearly supplied to the combustion chamber of the engine E. At the time of the medium speed rotation of the engine E, the air intake is obtained along a linear path, which leads to the most effective inertia supercharging utilizing a dynamic inertia of air.

In the case of the high speed rotation of the engine E, the rotational position of the rotor R is determined as illustrated in Fig. 7 in the same way as the case of the low speed rotation of the engine E. That is, the valve element 12 is arranged at the position where the valve element 12 is prevented from interfering with any ports P1 a, P1 b, and P2. Accordingly, the air taken in from both the short intake port P1 a and the long intake port P1 b is supplied to the air intake portion Ea.

The aforementioned controls of the rotational position of the rotor R are achieved by the control of the electric motor M by the intake control unit based on the number of rotations of the engine (i.e., an engine speed). In the intake control unit of the present embodiment, the rotor R is controlled to rotate in the forward direction (i.e., a counterclockwise rotation in Figs. 5 to 8) in cases of the shifting from the idling rotation to the extremely low speed rotation of the engine E, the shifting from the extremely low speed rotation to the low speed rotation of the engine E, and the shifting from the low speed rotation to the medium speed rotation of the engine E. In addition, the rotor R is controlled to rotate in the reverse direction (i.e., a clockwise rotation in Figs. 5 to 8) in the case of the shifting from the medium speed rotation to the high speed rotation of the engine E.

The air intake apparatus according to another embodiment will be explained as below.

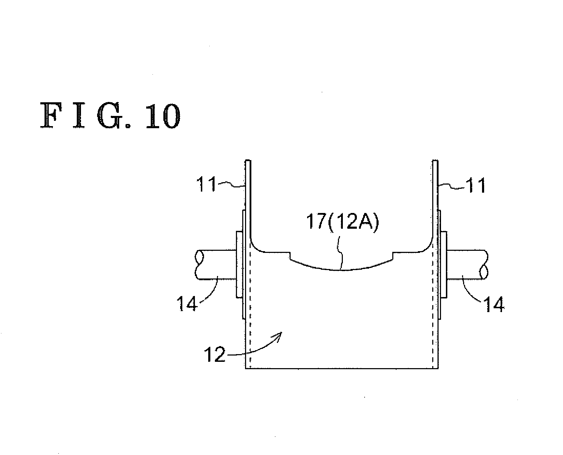

The air intake apparatus for the internal combustion engine may be applied not only to the four-cylinder engine but also to other types of the internal combustion engine. In addition, the rotary valve V is not limited to have the aforementioned structure and may have other shapes, dimensions, and/or materials. In the aforementioned embodiment, an edge of the cut portion 12A is formed into a linear shape as illustrated in Fig. 3. Alternatively, the edge of the cut portion 12A may be formed into an arc shape as illustrated in Fig. 10. Specifically, a center of the cut portion 12A along the rotational axis X of the rotor R is dented greater than both end portions of the cut portion 12A along the rotational axis X. In this case, the air passing through the rotary valve V is collected around a center of the passage, thereby generating a strong airflow at the downstream side because of a high speed airflow. As a result, the combustion efficiency is improved.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An air intake apparatus for an internal combustion engine, comprising:
a casing (C) having a hollow shape and constituting an air intake passage connected to a cylinder of an internal combustion engine, the casing including an intake port (P1) and a discharge port (P2); and
a rotary valve (V) mounted at an inside of the casing in a rotatably driven manner and including a rotor (R) that adjusts a volume of an airflow from the intake port (P1) to the discharge port (P2) of the casing;
the rotor including a valve element edge portion (12c) that varies an opening area of the discharge port, the valve element edge portion being formed by a cut portion (12A).

2. The air intake apparatus according to claim 1, wherein the cut portion (12A) is formed in such a manner that a center of the cut portion along a rotational axis (X) of the rotor (R) is dented greater than both end portions of the cut portion along the rotational axis (X).

3. The air intake apparatus according to either claim 1 or 2, wherein a guide surface (17) is formed at an edge of the cut portion (12A) to change a direction of the airflow and is specified to be in a tapered state where a distance between the guide surface (17) and a facing surface (18a) of an inner wall surface (18) of the discharge port (P2) facing the guide surface (17) decreases in a direction towards the discharge port (P2) in a case where the rotor is arranged in a maximally closed position relative to the discharge port (P2).

4. The air intake apparatus according to claim 3, wherein the guide surface (17) is specified to be in the tapered state in a case where the rotor is arranged in a partially open position that is positioned in an opening side relative to the maximally closed position.

5. The air intake apparatus according to either claim 1 or 2, wherein a guide surface (17) is formed at an edge of the cut portion (12A) to change a direction of the airflow and is specified to be in a tapered state where a distance between the guide surface (17) and a facing surface (18a) of an inner wall surface (18) of the discharge port (P2) facing the guide surface (17) decreases in a direction towards the discharge port (P2) in a case where the internal combustion engine is in an idling state.

6. The air intake apparatus according to any one of claims 1 through 5, wherein the intake port includes a short intake port (P1a) and a long intake port (P1b) having a longer path length than the short intake port, and the short intake port is closed by a rotation of the rotor while the cut portion (12A) is provided at the rotor (R).
